# EUROPEAN PATENT APPLICATION

(11) **EP 1 518 841 A1**
(43) Date of publication of application: **30.03.2005**
(21) Application number: 03256016.1
(22) Date of filing: 24.09.2003
(51) Int. Cl.: C04B 35/468, H01G 4/12, H01C 7/02, C01G 23/00

(54) **Ultralow firing temperature compensating ceramic composition for pure silver eletrode, sintering flux and laminated ceramic element obtained therefrom**

(71) Applicant: Yageo Corporation, Hsin-Tien City, Taipei Hsien, Taiwan ROC (TW)
(72) Inventor: Lee, Wen-Hsi, Kaohsiung (TW); Lee, Chun-Te, Kaohsiung (TW); Lee, Ching-Li, Kaohsiung (TW)
(74) Representative: Sexton, Jane Helen

(57) **Abstract**

The invention is directed to an ultralow firing temperature compensating ceramic composition, which comprises a ceramic material system represented by formula (I) Ba_{w}(NdₓSm_{y})₂Ti_{z}O_{w+3x+3y+3z} and a sintering flux represented by formula (II) (Zn,Si,Cu,Al,Mg,Ba,Bi,B)O. The ceramic material system of formula (I) comprises 10 to 30 mole % barium oxide, 10 to 30 mole % neodymium oxide, 0 to 20 mole % samarium oxide and 40 to 70 mole % titanium oxide. The sintering flux of formula (II) constitutes 5 to 40 mole % of the composition and comprises 1 to 5 weight % magnesium oxide, 1 to 5 weight % copper oxide, 5 to 30 weight % zinc oxide, 20 to 60 weight % bismuth oxide, 5 to 10 weight % aluminum oxide, 5 to 15 weight % silicon dioxide, 10 to 30 weight % barium oxide and 1 to 5 weight % boron oxide. The invention is also directed to a sintering flux system and a laminated ceramic element which is produced from the ultralow firing temperature compensating ceramic composition.

## Description

The present invention relates to an ultralow firing temperature compensating ceramic composition for pure sliver electrode, a sintering flux included in the composition, and a laminated ceramic element produced from the composition.

Typical ceramic elements (for example, capacitors) are classified into three types according to the dielectric constant of their ceramic material compositions: a high dielectric constant (Hi-K) type, a medium dielectric constant (Mid-K) type and a temperature compensating (TC) type. The dielectric constant of the high dielectric constant type can reach 4000 to 15000, and varies with temperature and exhibits unstable state. The dielectric constant of the medium dielectric constant type is about 1400 to 2200, and varies with temperature and exhibits nonlinear variation. The dielectric constant of the temperature compensating type is about 10 to 90, and varies least with temperature and exhibits linear variation.

The internal electrodes and ceramic dielectric layers of the laminated ceramic elements (for example, capacitors) must be co-fired. The ceramic material compositions of the laminated ceramic capacitors can be classified into a high firing temperature system and a low firing temperature system. The firing temperature of the high firing temperature system is about 1250°C to 1300°C. Since the firing temperature is rather high, it is necessary to use palladium metal with high melting point and high price as an internal electrode. As to the low firing temperature system, the firing temperature, being under 1150°C, a cheap silver/palladium alloy with a preponderant share of silver is used as an internal electrode to reduce the cost.

The TDK ceramic material system is based on (Ca,Sr)(Zr,Ti)O₃, wherein nickel (Ni) is used as an internal electrode and copper (Cu) is used as an external electrode. The TDK ceramic material system can be prepared by a base metal manufacturing process, wherein since its main component is CaZrO₃, strontium (Sr) is added for facilitating sintering, and titanium (Ti) is added for facilitating adjusting its dielectric temperature coefficient. The sintering temperature is about 1200 to 1300°C, and the dielectric constant k is 30, which is rather low. The TDK ceramic material system must be sintered at a reducing atmosphere so as to avoid oxidation of the nickel internal electrode, and has a high process cost. Furthermore, the system needs the use of a material having a dielectric constant of about 30, and has a comparatively high consumption of the material so that the cost is high.

The Murata ceramic material system is based on (BaNdLa)ₓTiO₃, wherein palladium (Pd) is used as an internal electrode and silver (Ag) is used as an external electrode. The Marata ceramic material system normally adopts a Ba(NdLaₓ)TiO₃ system, in which since the sintering temperature reaches 1400°C, it is necessary to use the expensive palladium metal as an internal electrode.

The PHILIPS ceramic material system is based on Ba(NdSm)₂Ti₅O₁₄, wherein a silver/palladium alloy (70 weight % silver, 30 weight % palladium) is used as an internal electrode and silver is used as an external electrode. The PHILIPS ceramic material system normally adopts Ba(NdSm)₂Ti₅O₁₄ + 2% ZST glass + B₂O₃, in which it is necessary to use the silver/palladium alloy as an internal electrode since the sintering temperature is comparatively high, i.e., 1050°C. Because this system must use 20 to 30 weight % palladium, the cost is rather high.

Consequently, there is a need for an ultralow firing temperature compensating ceramic composition for pure sliver electrode and a sintering flux system that can lower the cost, particularly the metal cost and the sintering temperature in the manufacuring.

The present invention relates to an ultralow firing temperature compensating ceramic composition for pure sliver electrode, wherein 100% pure silver can be used as an internal electrode.

The present invention relates to an ultralow firing temperature compensating ceramic composition for pure sliver electrode that can lower the sintering temperature to be below the melting point of silver and can be sintered at air atmosphere.

The present invention relates to a sintering flux system.

The present invention relates to a laminated ceramic element produced from the ultralow firing temperature compensating ceramic composition for pure sliver electrode.

The present invention relates to an ultralow firing temperature compensating ceramic composition for pure silver electrode comprising a main ceramic material system represented by formula (I) Ba_{w}(NdₓSm_{y})₂Ti_{z}O_{w+3x+3y+3z} and a sintering flux material system represented by formula (II) (Zn,Si,Cu,Al,Mg,Ba,Bi,B)O.

The term "ultralow firing temperature" as used herein means that sintering can be proceeded at a temperature below the melting point of silver (961°C).

The main ceramic material system is represented by formula (I) Ba_{w}(NdₓSm_{y})₂Ti_{z}O_{w+3x+3y+3z}, wherein 0.1≤w≤0.3, 0.1≤x≤0.3, 0≤y≤0.2 and 0.4≤z≤0.7. The main ceramic material comprises barium oxide (BaO) preferably supplied by the base material of barium carbonate (BaCO₃), neodymium oxide (Nd₂O₃) preferably supplied by the base material of neodymium carbonate (Nd₂(CO₃)₃), samarium oxide (Sm₂O₃) preferably supplied by the base material of samarium oxide, and titanium oxide (TiO₂) preferably supplied by the base material of titanium oxide. In the formula (I), the main ceramic material system may contain 10 to 30 mole % barium oxide 10 to 30 mole % neodymium oxide 0 to 20 mole % samarium oxide and 40 to 70 mole % titanium oxide.

Taking (BaNd₂)Ti_{z}O₁₄ material as an example, since its dielectric constant (K) is 90, and the temperature coefficient (Tc) is +93ppm/ °C, the material can be sintered at 1300°C. However, the dielectric constant-temperature curve can be adjusted by adding samarium oxide so as to fit the NPO specification. The NPO specification is that the capacitor temperature coefficient [(1/C)(ΔC/T)] is ±30ppm/°C when the capacitor is at the temperature range of -55 °C to 125 °C.

The main ceramic material system represented by formula (I) is prepared according to the following process. Barium carbonate, neodymium oxide, samarium oxide and titanium oxide in the desired amount are mixed in water for 3 hours. The mixture is dried, calcined at 1000°C for 4 hours, and then milled for 10 to 15 hours in a roller with zirconium oxide balls of 2mm and water to reduce the mean particle size of the ceramic powder to 0.5±0.1 µm. Then the ceramic powder is dried.

The sintering flux material system represented by formula (II) (Zn,Si,Cu,Al,Mg,Ba,Bi,B)O comprises 1 to 5 weight % magnesium oxide (MgO), 1 to 5 weight % copper oxide (CuO), 5 to 30 weight % zinc oxide (ZnO), 20 to 60 weight % bismuth oxide (Bi₂O₃), 5 to 10 weight % aluminum oxide (Al₂O₃), 5 to 15 weight % silicon dioxide (SiO₂), 10 to 30 weight % barium oxide (BaO) and 1 to 5 weight % boron oxide (B₂O₃). According to the present invention, the sintering flux material system constitutes 5 to 40 mole % of the composition.

The magnesium oxide is added for raising the quality factor (Q). The aluminum oxide is added for raising the mechanical strength and the corrosion resistance. The copper oxide is added for adjusting the temperature curve and raising the quality factor. The bismuth oxide is added for facilitating sintering and raising the dielectric constant (K). The boron oxide is added for reducing sintering temperature. The ZnO-SiO₂-BaO glass system is added for facilitating sintering and lowering the sintering temperature.

The sintering flux material system is prepared according to the following process. Magnesium oxide, aluminum oxide, copper oxide, bismuth oxide, silicon dioxide, zinc oxide, barium oxide and boron oxide in the desired amount are mixed in water for 3 hours. The mixture is dried, calcined at 500 °C for 4 hours, and then milled by using zirconium oxide balls of 2mm to reduce the mean particle size of the ceramic powder to 0.5±0.1µm. Then the ceramic powder is dried.

The present invention also relates to a laminated ceramic element produced from the above-mentioned ultralow firing temperature compensating ceramic composition comprising a main ceramic material system represented by formula (I) Ba_{w}(NdₓSm_{y})₂Ti_{z}O_{w+3x+3y+3z;} wherein 0.1≤w≤0.3, 0.1≤x≤0.3, 0≤y≤0.2 and 0.4≤z≤0.7, and a sintering flux material system represented by formula (II) (Zn,Si,Cu,Al,Mg,Ba,Bi,B)O, wherein the sintering flux material system of formula (II) comprises 1 to 5 weight % magnesium oxide, 1 to 5 weight % copper oxide, 5 to 30 weight % zinc oxide, 20 to 60 weight % bismuth oxide, 5 to 10 weight % aluminum oxide, 5 to 15 weight % silicon dioxide, 10 to 30 weight % barium oxide and 1 to 5 weight % boron oxide.

In the laminated ceramic element of the present invention, the stoichiometric ratio of the main ceramic material system of formula (I) and the sintering flux material system of formula (II) preferably includes 10 to 30 mole % barium oxide, 10 to 30 mole % neodymium oxide, 0 to 20 mole % samarium oxide, 40 to 70 mole % titanium oxide and 5 to 40 mole % sintering flux material system of formula (II).

The examples of the laminated ceramic element are capacitor, inductor, varistor, driver, etc.

The laminated ceramic element is prepared according to the following process. The main ceramic material system and sintering flux material system each in an appropriate amount are mixed in water for 3 hours. Then, polyvinyl alcohol (PVA), polyethylene glycol (PEG) plasticizer, wetting agent and antifoamer are added into the mixture. The resulting mixture is stirred intensively and degassed at vacuum. A doctor blade is utilized to form a ceramic film having a thickness of 20 µm onto which is printed a pure silver paste by a printer. After being dried, the ceramic films are stacked, laminated by hot press under a pressure of 30 ton and at a temperature of 100°C, and then cut to form a 1206 size. The 1206 size is a standard specification, which equals to 3.2mm x 1.6mm. Subsequently, a heat treatment is applied to the laminated assembly, wherein the binding agent is removed at 300°C and the laminated assembly is sintered at air atmosphere for 2 to 4 hours. Silver paste is then applied to the opposite edges of the laminated assembly as the external electrodes. Finally, a product is produced after electroplating.

The main properties of the produced laminated ceramic element include electrical properties such as quality factor (Q), dielectric constant (K) and temperature coefficient (TCC), and density. The test conditions are test frequency of 1MHz and test voltage of 1V. The quality factor of the laminated ceramic element is preferably larger than 1500. The dielectric constant of the laminated ceramic element is preferably larger than 60 (1MHz), more preferably larger than 75 (1MHz). The temperature coefficient of the laminated ceramic element is preferably less than ± 15ppm/°C. The density of the laminated ceramic element is preferably larger than 5.2 g/cm³.

With reference to the accompanying examples, the present invention will now be detailed; however, the scope is not confined to the examples.

### EXAMPLE

### Examples 1 to 14

Barium oxide, neodymium oxide, samarium oxide and titanium oxide in proportions shown in Table 1 were mixed in water for 3 hours. The mixture was dried, calcined at 1000°C for 4 hours, and then milled for 10 to 15 hours in a roller with zirconium oxide balls of 2mm and water to reduce the mean particle size of the ceramic powder to 0.5±0.1µm. Then the ceramic powder was dried to obtain the main ceramic material system.

The main ceramic material system and a sintering flux material system in proportions shown in Table 1 were mixed in water for 3 hours. Then, polyvinyl alcohol (PVA), polyethylene glycol (PEG) plasticizer, wetting agent and antifoamer were added into the mixture. The resulting mixture was stirred intensively and degassed at vacuum. A doctor blade was utilized to form a ceramic film having a thickness of 20 µm onto which a pure silver paste was printed by a printer. After being dried, the ceramic films were stacked, laminated by hot press under a pressure of 30 ton and at a temperature of 100°C, and then cut to form 1206 size. Subsequently, a heat treatment was applied to the laminated assembly, wherein the binding agent was removed at 300°C and the laminated assembly was sintered at air atmosphere and at a temperature of 930°C for 2 hours. Silver paste was then applied to the opposite edges of the laminated assembly as the external electrodes. A laminated ceramic element was produced after electroplating.

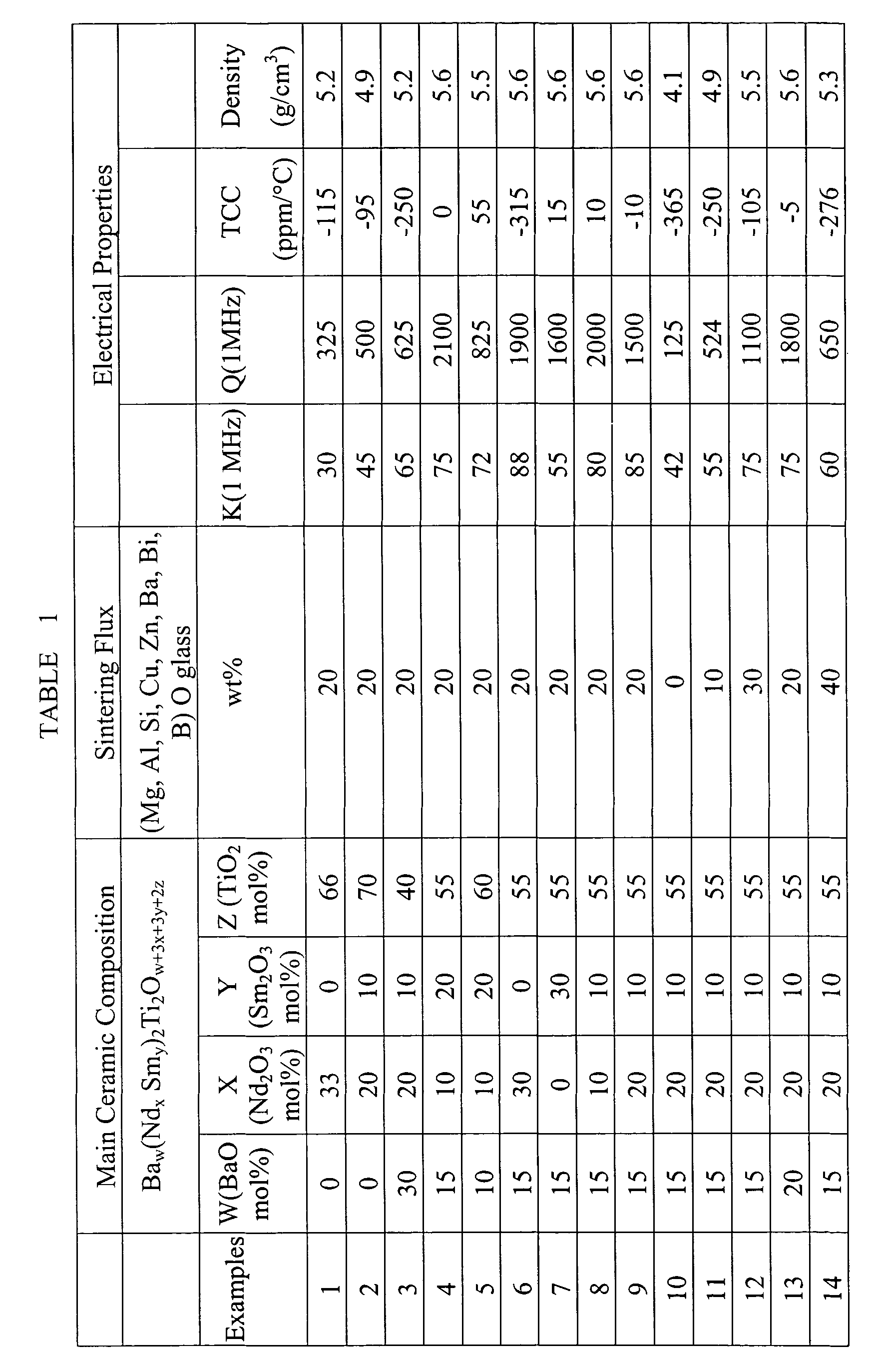

### Examples 15 to 27

The main ceramic material system and sintering flux material system were prepared according to the proportions shown in Table 2 in the same method of Examples 1 to 14. The laminated ceramic element was then produced, wherein 80 weight % the main ceramic material system (15 mol % barium oxide, 20 mol % neodymium oxide, 10 mol % samarium oxide and 55 mol % titanium oxide) was mixed with 20 weight % the sintering flux material system.

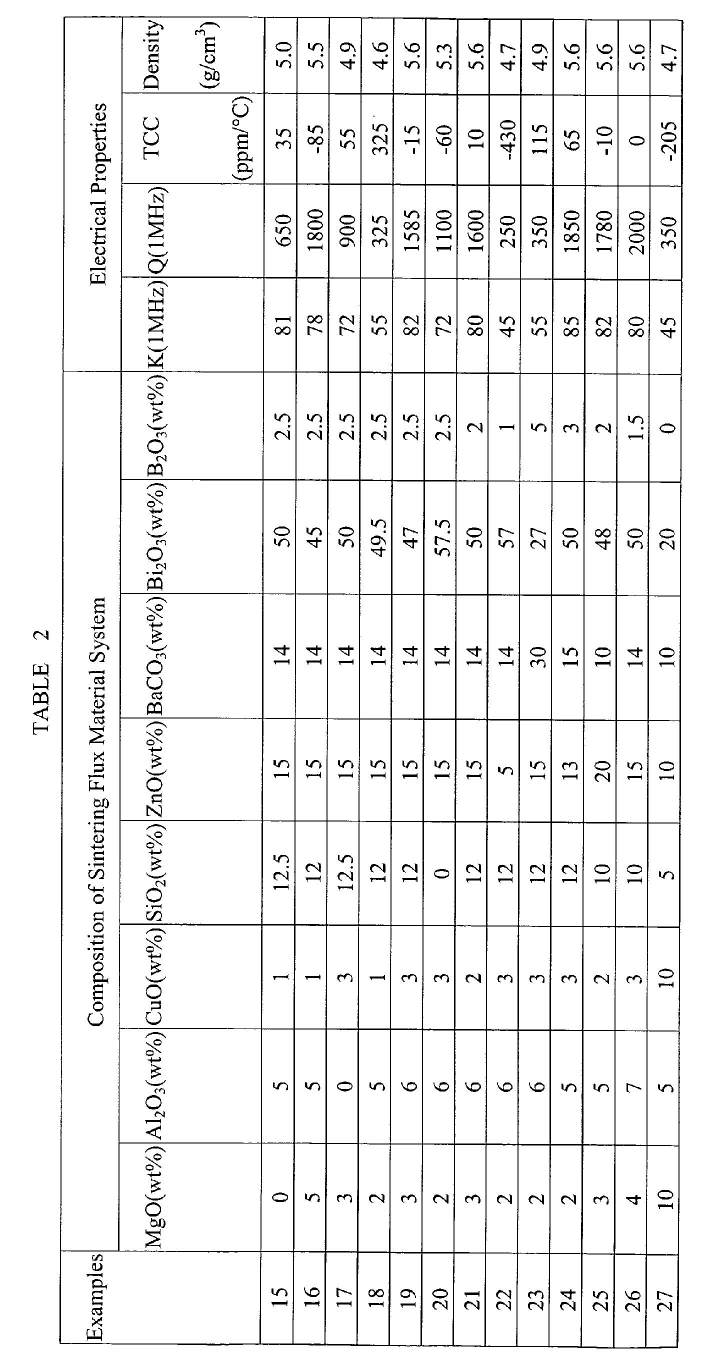

The ultralow firing temperature compensating ceramic composition for pure silver electrode according to the present invention can be sintered at a temperature below the melting point of silver (961°C) in air. Therefore, it is not necessary to use cexpensive metals such as palladium as an internal electrode, and it is not necessary to sinter the composition in nitrogen gas. The cost is hugely reduced.

While several embodiments of this invention have been illustrated and described, various modifications and improvements can be made by those skilled in the art. The embodiments of this invention are therefore described in an illustrative but not restrictive sense. It is intended that this invention may not be limited to the particular forms as illustrated, and that all modifications that maintain the spirit and scope of this invention are within the scope as defined in the appended claims.

## Claims

1. An ultralow firing temperature compensating ceramic composition for a pure silver electrode comprising a main ceramic material system represented by formula (I) Ba_{w}(NdₓSm_{y})₂Ti_{z}O_{w+3x+3y+3z}, wherein 0.1≤w≤0.3, 0.1≤x≤0.3, 0≤y≤0.2 and 0.4≤z≤0.7, and a sintering flux material system represented by formula (II) (Zn,Si,Cu,Al,Mg,Ba,Bi,B)O, which comprises 1 to 5 weight % magnesium oxide, 1 to 5 weight % copper oxide, 5 to 30 weight % zinc oxide, 20 to 60 weight % bismuth oxide, 5 to 10 weight % aluminum oxide, 5 to 15 weight % silicon dioxide, 10 to 30 weight % barium oxide and 1 to 5 weight % boron oxide.

2. The ultralow firing temperature compensating ceramic composition according to claim 1, wherein the main ceramic material system of formula (I) comprises 10 to 30 mole % barium oxide, 10 to 30 mole % neodymium oxide, 0 to 20 mole % samarium oxide and 40 to 70 mole % titanium oxide.

3. The ultralow firing temperature compensating ceramic composition according to claim 1 or 2, wherein the sintering flux material system of formula (II) constitutes 5 to 40 mole % of the composition.

4. A sintering flux material system represented by formula (II) (Zn,Si,Cu,Al,Mg,Ba,Bi,B)O comprising 1 to 5 weight % magnesium oxide, 1 to 5 weight % copper oxide, 5 to 30 weight % zinc oxide, 20 to 60 weight % bismuth oxide, 5 to 10 weight % aluminum oxide, 5 to 15 weight % silicon dioxide, 10 to 30 weight % barium oxide and 1 to 5 weight % boron oxide.

5. A laminated ceramic element obtainable from an ultralow firing temperature compensating ceramic composition as claimed in any one of claims 1 to 3.

6. The laminated ceramic element according to claim 5, wherein the element is capacitor.

7. A process for preparing a laminated ceramic element said process comprising using as a ceramic composition an ultraflow firing temperature compensating ceramic composition for a pure silver electrode as claimed in any one of claims 1 to 3.

8. A process as claimed in claim 7 in which the ceramic composition is prepared in an aqueous environment, a ceramic film is formed, dried and laminated.
